# EUROPEAN PATENT APPLICATION

(11) **EP 0 881 117 A2**
(43) Date of publication of application: **02.12.1998**
(21) Application number: 98201788.1
(22) Date of filing: 29.05.1998
(51) Int. Cl.: B60P 3/025, B60P 3/34

(54) **Temporary canopy**

(30) Priority: 29.05.1997 GB 9711019
(71) Applicant: Timmins, Malcolm Edward, Blackhills, Near Swindon, Dudley, DY3 4PU (GB)
(72) Inventor: Timmins, Malcolm Edward, Blackhills, Near Swindon, Dudley, DY3 4PU (GB)
(74) Representative: Gee, Steven William

(57) **Abstract**

This invention relates to a temporary canopy, and in particular to a retractable temporary canopy. According to the invention there is provided a temporary canopy which includes a base member)(40), a first support member (46A) pivotally mounted relative to the base member, a first drive arm (48A) connected to the first support member (46A) to pivot therewith, a flexible awning (60) with first and second edges, first coupling means to connect the first edge of the awning to the first drive arm (48A) and first holding means to connect the second edge of the awning to the base member (40), and first drive means to pivot the first support member (46A) relative to the base member (40) so as to move the first drive arm (48A) whereby to move the said first edge of the awning relative to the second edge in order to open a closed awning or to close an open awning.

## Description

### FIELD OF THE INVENTION

This invention relates to a temporary canopy, and in particular to a retractable temporary canopy.

Geometrical terms used below, such as horizontal and vertical, will relate to gravitational directions.

### BACKGROUND TO THE INVENTION

Canopies provide a roof-like covering over an area to be protected. As such, canopies have long been used as ornamental coverings above thrones, and typically then have a rigid overhang secured to the mounting for the throne; the overhang may carry drapes. These canopies are however "permanent", not normally being removed when not in use. Other such canopies provide an ornamental covering for certain types of bed, and have fixed stanchions at the bed corners to support an awning of flexible material which hangs above the bed.

Canopies which are permanent are not therefore retractable, for instance to a non-use or storage condition, or to a "transport" condition allowing re-use elsewhere. Thus the permanent canopies remain in their predetermined position, relative to the throne, bed or the like, for extended periods.

### DISCLOSURE OF THE PRIOR ART

Canopies which include an awning of a flexible material as part of a temporary structure have also long been known, typically as protective awnings erected above outdoor stages to provide short-term protection for performers against overhead weather such as the sun or rain. Stage canopies traditionally comprise an awning mounted on vertical or near vertical support stanchions located near the stage periphery, with the awning overlying the stage. When the performance has ended, the canopy is dismantled, with the awning being removed to be stored separately from the stanchions.

Similar temporary canopies are used by market traders and the like who trade from stalls, with the awning and associated stanchions dismantled and removed at the end of each day's trading. Disadvantages include (i) that the canopy components are usually transported to (and from) the site inside a trader's vehicle, occupying space which could be used for extra stock; (ii) that the erection of the canopy is time consuming, reducing the trading time available or requiring an earlier start by the trader; (iii) that the canopy erection (and subsequent dismantling) can rarely be effected single-handed, so that assistants are required; (iv) that the canopy erection may need to be effected even though it is raining heavily, so that users will start the working day in wet clothes, and perhaps therefore need to finish earlier than they would otherwise wish; and (v) a stanchion or other canopy part may be misplaced during dismantling of the canopy, and the completeness of the canopy components will need to be checked before the next trading occasion.

Retractable temporary canopies with an awning of a flexible material are also known, for instance to protect the area in front of a shop window. Typically the awning is rolled up after use onto a spindle located above the shop window, and the canvass can become creased. Such canopies do not however require stanchions, since the canopy is mounted to the shop front by "side arms". The area protected by the canopy is limited to the length of the spindle. Furthermore, some of the support parts of roller canopies are below awning height and can therefore be a danger to (tall) passers-by.

### DISCLOSURE OF THE INVENTION

We now propose a temporary canopy which includes a retractable awning and which does not require supporting stanchions.

Thus we propose a temporary canopy which includes a base member, a first support member pivotally mounted to the base member, a first drive arm connected to the first support member to pivot therewith, a flexible awning with first and second edges, first coupling means to connect the first edge of the awning to the first drive arm and first holding means to connect the second edge of the awning to the base member, and first drive means to rotate the first support member relative to the base member so as to move the first drive arm whereby to move the said first edge of the awning relative to the second edge in order to open a closed awning or to close an open awning.

Desirably the base member is a hollow container within which the closed canopy can be stored, the canopy being retracted into the container (canopy box) after use. The canopy box will preferably have a closable lid, conveniently a hinged lid.

The first holding means is preferably a channel in the floor of the canopy box, so that the one edge (the second edge) of the awning is retained in the canopy box. Alternatively the channel may be in an arm guided for movement in the canopy box - for instance if the lateral position of the canopy is to be adjustable i.e. an indirect connection to the base member. In a less preferred arrangement the first holding means may also indirectly connect the said second edge of the awning to the base member; thus the first holding means may be a holding arm carried by the guide for a spindle, the guide being itself rotatable to a pre-set position, for instance by ninety degrees from the awning storage position. For opening of the awning, in this embodiment the holding arm (and thus the second edge of the awning) is initially set to extend perpendicular or nearly so to the base member; the spindle is then rotated so that the drive arm is rotated away from the holding arm so as to open the awning.

The first holding means may be guided for horizontal movement relative to the base member. Thus for reducing the coverage of the awning, for instance in a crowded market, the first holding means can be moved relative to the base member away from one corner of the base member. With no adjacent obstructions, the first holding means can be moved towards or back to that corner whereby to permit the awning to cover an area up to and usefully beyond that corner of the base member (and beyond the vehicle) e.g. with a permitted rotation of the spindle greater than ninety degrees.

Preferably the base member will carry a second and independent support member (with a second drive arm) at a position spaced horizontally relative to the first support member. The second drive means will be arranged to drive the second support member in the opposite sense to that of the first support member i.e. during successive opening movements one support member will be driven clockwise and the other support member will be driven anti-clockwise, such that the second drive arm during canopy opening approaches the first drive arm, whereby to provide a canopy of half-moon shape. Preferably however the second support member and/or the second drive arm will be at a position which is also vertically spaced, such that during opening of the second awning the second drive arm can pivot beyond the first drive arm whereby part of the second awning is below part of the first awning, for an overlap protection against the sun and rain.

Usefully the awning will comprise several triangular sections with radial edges held by idler arms pivotally mounted on the spindle guide. Thus as the first drive arm pivots the idler arms are pulled with it until the awning sections are all taut; and conversely are pushed in the opposite angular direction if the canopy is being closed. An advantage of a sectioned awning is that the sections will hang only a relatively short distance in the closed condition, reducing the size of the canopy box needed, and avoiding fouling by the upper awning of the lower canopy during relative movement over the overlap area. A single-piece awning can alternatively be used, effectively sectioned as by the awning being suitably secured to the idler arms (as by stitching or being gripped in idler arm grooves). An advantage of the idler arms, if of different lengths, is that the erected canopy can be of non-crescent shape e.g. with a straight second edge or generally of rectangular shape. Usefully also, the idler arms (or material hung therefrom) have openings to receive coat hangers and the like, for the display and/or temporary storage of clothing articles.

The base member can be mounted on a vehicle, so that the temporary canopy is movable from one location to another; the canopy being erectable around or alongside a part of the vehicle whilst the vehicle is stationary.

In one embodiment the base member is part of a high-sided vehicle such as is used by TV/radio companies, with a canopy (perhaps translucent) suited for outdoor interviews. If for a horse box or the like, the canopy can be opened at a height such that horses can be attended to underneath the canopy, without equipment such as saddles becoming wet (before a competition), or to allow the horses to cool off (after the competition); in both cases the absence of stanchions avoids possible injury to the horses, and reduces the prospect of a stanchion being displaced and the canopy being inadvertently demolished by a frisky horse.

In an alternative embodiment the base member is mounted on a "roof rack" which is carried in conventional manner on the vehicle, and removable in toto from the vehicle if so required. The rack, at least on the side adjacent the canopy, will have a skirt, acting as a splash rail, to inhibit driving rain penetrating below the roof rack and so below the awning.

Preferably each drive means is operated by controls connected to the vehicle; preferably the controls are attached to an extended cable which may be operated from inside (or if preferred outside) the vehicle. It is considered to be advantageous that the canopy can be erected, particularly in wet weather, without the operator needing to emerge from the vehicle. However, it is also possible to erect the canopy from outside the vehicle, and this may be preferred if space around the vehicle is limited, i.e. if it is necessary to ensure that the drive arms or idler arms do not impact an adjacent vehicle or building.

Market traders in particular may cut short their selling day if they have become wet whilst erecting a traditional canopy, so that our canopy allows them a potentially longer selling period.

In a further embodiment, with the canopy erected, the base member can be tilted relative to the vehicle, either to effect removal of rain water which may have settled on the canopy or to assist the flow of rain water off the canopy. Thus the erected canopy can be angled relative to the horizontal, with its free perimeter being above or below the mounting of the support member to the base, as desired.

The base member will convenently be in the form of a box, with a hinged cover, the cover being shut when the canopy is stowed away e.g. when the vehicle is being driven to or from the work site. When fitted to a roof rack, preferably, the box is pivotable between a substantially vertical operating position and a substantially horizontal stored condition. The ability to pivot the box into a substantially horizontal position permits the roof rack to be in a safer condition during vehicle movements, and also perhaps to offer less wind resistance.

Preferably, the cover for the box is hydraulically actuated. Preferably also, the drive means incorporates a hydraulic actuator. In addition, if the box is itself pivotable then this pivotting movement is preferably hydraulically actuated.

Usefully, the hydraulic fluid is pumped to the hydraulic actuators by an electric pump. Usefully also, a single electric pump selectively pumps hydraulic fluid to all of the actuators, a selection means being present, under the control of the control means, to determine the actuators to which the fluid will be pumped at a given time. The selection means can ensure that only a single actuator (or set of actuators if a set is required to perform the same task) can be supplied with fluid at a given time, so that the canopy is erected as a sequence of discrete operations.

Preferably, the hydraulic fluid can be pumped manually in the event of a failure of the electric pump.

Alternatively, separate electric motor drives could be used in place of the hydraulic actuators, but in each case preferably with the facility to actuate the various pivots manually, as by a headed extension with which a suitably shaped tool can cooperate.

Usefully, the electric motor or motors are powered from the battery of the vehicle. The control means will include suitable safety means to prevent operation of the motor or motors whilst the vehicle is moving (or if the vehicle ignition is switched to "on"). Usefully, a key-operated isolator switch is located in the electrical circuit between the battery and the canopy motor or motors, the key for the isolator being fitted to the same key ring as the vehicle ignition key. If the isolator switch is sufficiently remote it will be necessary to remove the ignition key before disabling the isolator and so providing power to the canopy motor or motors.

This embodiment is likely to be of advantage to market traders and the like, who need to carry their stock in the vehicle and who consequently are no longer required to make space inside the vehicle for the traditional stanchions and awning.

We foresee that our invention will have particular utility when assembled on or with larger, heavier vehicles, which can park on hard standing adjacent an area of grass or the like into which the vehicle wheels might sink; the area of grass or the like being covered by the erected canopy and providing a sales area.

We also propose a method of opening a temporary canopy comprising the steps of {i} providing a temporary canopy as herein defined in a box; {ii} pivotting the cover of the box to expose the canopy components; {iii} energising the first drive means to cause said one edge of the canopy to be moved relative to the second edge.

### BRIEF DESCRIPTION OF THE DRAWINGS

The invention will be further described by way of example with reference to the accompanying drawings, in which :-
- Fig.1: shows a front view of part of a vehicle fitted with a roof rack which carries a base member in the form of a canopy box and also a control box, each box being in a substantially horizontal, stored, position;
- Fig.2: shows a view similar to that of Fig.1, with the canopy box tilted into a substantially vertical position;
- Fig.3: shows a view similar to that of Fig.2, with the cover for the canopy box in the opened condition;
- Fig.4: shows the opened canopy box of Fig.3 when viewed from the side of the vehicle;
- Fig.5.: shows a plan view of erected dual canopies in one position of use;
- Fig.6: shows a view of part of the operating componentry of a canopy;
- Fig.7: shows a plan view of the sleeve and mountings for the idler arms; and
- Fig.8: shows a cross sectional view of an idler arm.

### DESCRIPTION OF EXEMPLARY EMBODIMENTS

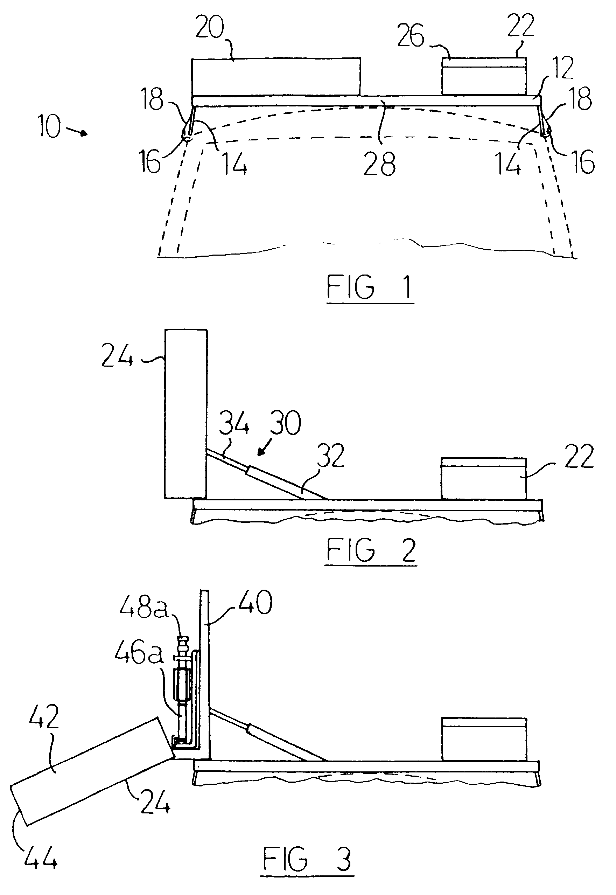

The vehicle 10 of Fig.1 has a roof rack 12. There is a splash rail 14 at each longitudinal side of the roof rack 12, which engage the respective rain channels 16 and are secured thereto by releasable fixing members 18, in known fashion.

Secured to the roof rack is firstly a canopy box 20 and secondly a control box 22. Each box 20,22 has a weatherproof lid or cover, the lid 24 for the canopy box being hinged on pivots (not shown). In one embodiment the lid 24 is lockable to prevent unauthorised access to the canopy, as is the lid 26 for control box 22.

The control box 22 contains {i} an electric motor, {ii} a hydraulic pump driven by the electric motor, {iii} a reservoir for hydraulic fluid, and {iv} a set of selection valves connected to the pump with their respective outlets connected to hydraulic lines which in turn are connected to the actuators of the canopy. The hydraulic lines between the control box 22 and the canopy box 20 are strapped to a cross member of the roof rack, and in Figs. 1-3 are hidden behind the front rail 28 of the roof rack.

Conveniently, the control unit (not shown) for the electric motor and for the hydraulic valves is connected to an elongated cable and is operable either from inside or outside the vehicle 10, as desired.

Electrical power is provided to the control unit and the control box from the vehicle's battery, and an isolator is located in the circuit, which isolator is designed to prevent the inadvertent operation of the electic motor (and thus opening of the canopy) whilst the vehicle is moving or whilst its ignition is switched on. In one embodiment, the isolator is key operated and is remote from the vehicle's ignition key socket. If the isolator key and ignition key are carried by a common key ring it is required to remove the vehicle's ignition key prior to erection of the canopy.

Alternative safety means to prevent energisation of the canopy motor if the vehicle ignition is switched on could be incorporated if desired.

In an alternative embodiment a separate battery or other power source is provided for energising the control unit and pump motor. The choice of suitable components and the manner of effecting the above-mentioned arrangements will be well understood by and within the capabilities of those to whom the specification is addressed and further description is therefore considered unnecessary.

In a preferred embodiment, the roof rack 12, canopy box 20, control box 22 and the associated hydraulic and electric line connections are manufactured off-site, and preferably are of a dedicated size and disposition for the particular vehicle 10, so that a pre-assembled roof rack and canopy componentry can be fitted to an existing vehicle.

In an alternative embodiment to that of Fig. 1, at least the canopy box is inbuilt as part of a high-sided vehicle i.e. with the cover 24 being normally vertical when in closed condition, and substantially flush with the side of the vehicle. The cover remains closed to prevent the awning from being drawn out or blown out of the canopy box during travel to and from the selected "site for use", and with the control box and the connections either also part of the vehicle side or within the vehicle body.

With components arranged as shown in Fig.1, the operator's first step is to energise the hydraulic pump and a selected valve so as to feed fluid under pressure to a pair of hydraulic rams 30 at either end of the box 20 (only one of which can be seen in Fig.2). As shown the ram cylinder 32 is coupled to the roof rack 12 and the ram piston rod 34 is coupled to the canopy box 20, but these couplings could be reversed. Upon extension of the hydraulic rams 30, the canopy box 20 is tilted relative to the roof rack about a pivot (not shown).

For a high-sided vehicle, with the canopy box 20 forming part of the vehicle side, rams 30 can still be provided but only for the adjustment facility about the vertical disposition.

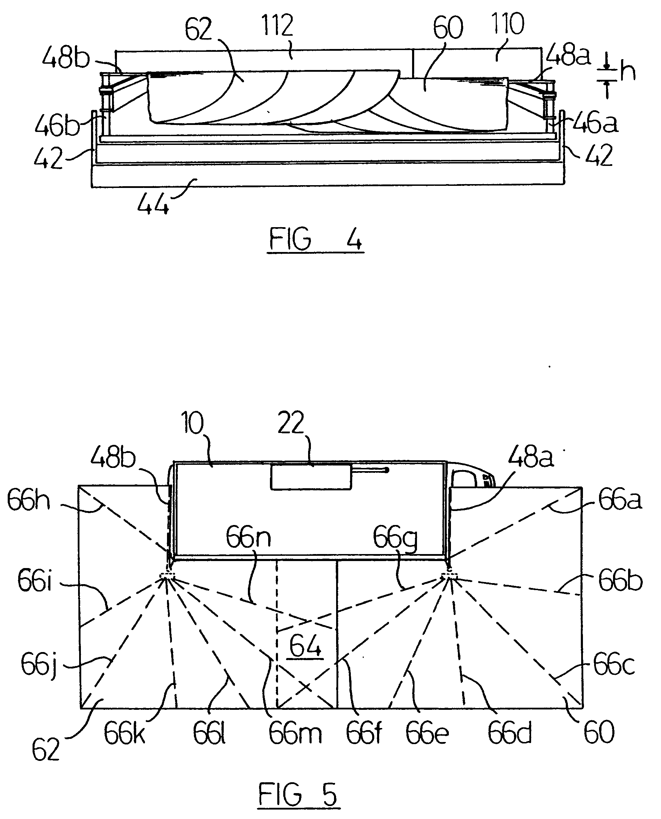

As shown in Fig.3, the next step is to open the cover 24, which is effected by a second pair of hydraulic rams (not shown) coupled between the base member 40 of canopy box 20 and the cover 24. The second pair of rams have a set extension such that with the base member 40 substantially vertical the cover is at an angle below the horizontal i.e. to minimize the risk of the cover 24 fouling an opened awning. The cover 24 has side skirts 42 and a front skirt 44 (see also Fig.4); when the cover is closed these skirts act to enclose the contents of box 20.

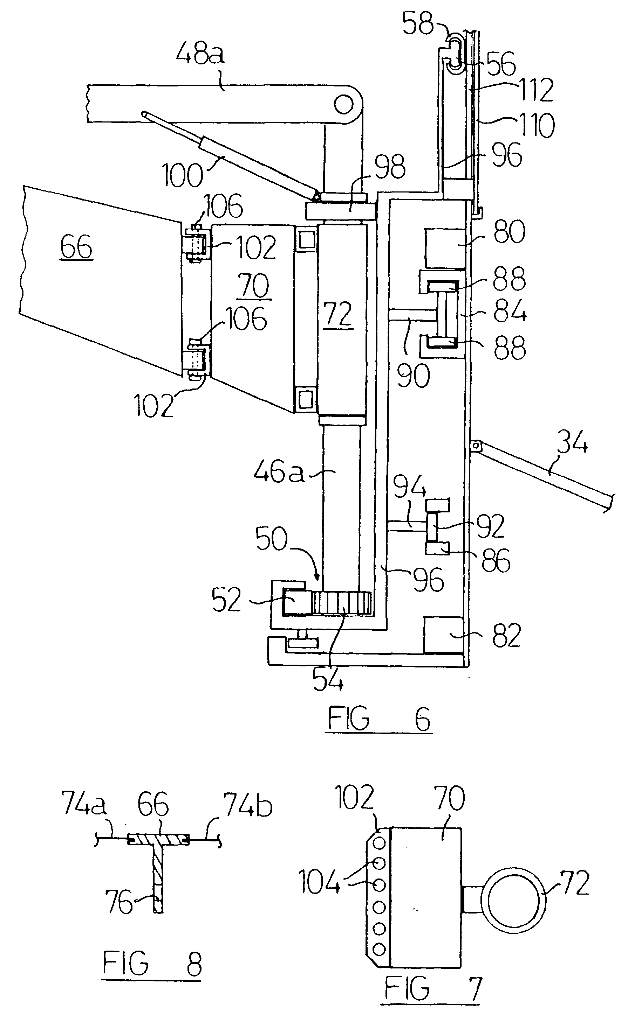

As shown in Figs.3 and 6, the canopy box contains a first support member 46a, to which is connected a first drive arm 48a. The support member 46a and drive arm 48a are connected to rotate together, which rotation is caused by drive means 50, which in this embodiment comprises a rack 52 and pinion 54, the rack being movable into and out of the paper by a hydraulic ram (not shown). As shown in Fig.3, the support member 46a has been rotated to its stored condition, with the drive arm 48a lying substantially parallel to the base member 40; in Fig.6 the support member 46a and drive arm 48a have been rotated through approximately 90^{o} so that the drive arm 48a is approximately perpendicular to the base member 40.

For clarity, the awning is not shown in Figs. 3 and 6; it will be understood however, than in the condition of Fig.3 the stowed awning lies substantially parallel to the support member 46a, within the volume to be enclosed by the cover 24. One edge of the awning is connected to the base member 40 by way of holding means; another edge of the awning is connected to the drive arm 48a by way of coupling means. As shown in Fig.6, in this embodiment the holding means comprises a bar 56 located in channel 58, both the bar and channel extending into the paper. The second edge of the awning is wrapped around or otherwise secured to the bar 58, in known fashion. The first edge of the awning is wrapped around the drive arm 48a, or otherwise connected thereto, in known fashion.

Referring to Figs. 4 and 5, in the embodiment shown, the canopy box 20 contains two separate awnings 60,62, each with its own support member 46a,b and drive means 48a,b respectively. The awnings 60,62 can be swung in succession towards and away from their erected and stowed conditions, with respective opposed angular movements.

From the stowed condition shown in Fig.4, the support member 46b of the rearmost (second) awning 62 is rotated by way of its drive means (not shown) in a clockwise direction according to the orientation of Fig.5. When the second awning 62 has been fully extended, the frontmost (first) awning can be similarly extended by way of drive means 50, effecting an anti-clockwise rotation according to the orientation of Fig.5. It will be understood that the height differential h (Fig.4) between the first 60 and second 62 awnings permits the first awning to be fully opened and closed beneath the extended second awning without fouling the second awning. In this regard, it is preferable that the second awning be fully extended, so that each awning panel is taut and does not sag into the path of the first awning as it is being opened or closed.

Thus, the higher of the two awnings 62 is opened first (and closed last), and the control unit is so programmed.

In their extended conditions as shown in Fig.5, the awnings 60,62 provide an overlap area 64. The size of the overlap area can be predetermined to prevent or substantially reduce the likelihood of rain water flowing between the awnings and falling onto the covered area.

As shown in Fig.5, each drive arm can be rotated through approximately 270^{o} so that the erected canopy can cover an area to the side and also to the front and rear of the vehicle 10. In order to permit the erected canopy to be of a rectangular shape, idler arms 66 are provided, which are of a length determined to provide the required awning shape. In this embodiment, each support member carries seven idler arms 66a-g and 66h-n respectively, which have varying lengths suited to their respective positions.

In an alternative embodiment, the drive and idler arms are all of the same length so that the awning is of fan shape in plan view.

The idler arm 66a is hingedly connected to the first drive arm 46a, whilst the idler arms 66b-g are hingedly connected to a bracket 70 mounted to a sleeve 72 which in turn is freely rotatable about the first support member 46a. The idler arm 66h is hingedly connected to the second drive arm 46b, whilst the idler arms 66i-n are hingedly connected to a similar bracket 70 mounted to a similar sleeve 72 which in turn is freely rotatable about the second support member 46b. Thus, the idler arms 66a-n are not driven to their respective "erected" positions shown in Fig.5, but are pulled there by the respective awning 60,62 which in turn is pulled by the drive arms 48a,b.

Thus, when the first drive arm 48a is swung towards the extended awning condition, the awning successively pulls the idler arms 66a-g until the awning 60 is taut, with the "trailing" second edge of the awning 60 held to the base member 40 by holding bar 56 and channel 58. When the first drive arm 48a is swung in the opposite angular direction (clockwise as viewed in Fig.5), the awning 60 successively pushes the intermediate idler arms 66a-g until these arms and the awning are stowed adjacent the base member 40.

Although the awnings 60,62 can each be a single piece of flexible material (e.g. canvas or a woven plastics material) connected at selected positions to the respective idler arms, preferably each awning is composed of a number of sections, mostly triangular, which are connected at their edges to the respective idler arms. One such method of connection is shown in Fig.8, which shows respective awning sections 74a,74b each of which has an edge trapped within a channel of the idler arm 66. This arrangement has the advantages that an individual section can replaced if damaged, and that the separate strips will have a lower vertical hang in the stowed position illustrated in Fig.4.

In this embodiment, the idler arms are of "T" section, and carry a downwardly extending drape with reinforced holes 76 suitable for holding clothes hangers or the like, making the canopy particularly suited for the covered display of various hung products including clothing garments.

As an additional feature of the embodiment of canopy shown, the first support member 46a and its associated drive means 50 and drive arm 48a, can undergo translational movement relative to the base member 40.

Thus, as shown in Fig.6, the canopy box 20 contains a rectangular frame comprising an upper frame part 80, a lower frame part 82, and two side frame parts (not shown) interconnecting the ends of the upper and lower frame parts. Connected to the side frame parts, and lying between the upper 80 and lower 82 frame parts is a main channel 84 and a secondary channel 86. The main channel 84 supports a pair of rotatable wheels 88 which are mounted upon bracket 90; the secondary channel 86 locates another rotatable wheel 92 which is mounted upon bracket 94.

Both of brackets 90 and 94 are rigidly connected to a carrier 96. The main bearing 98 for the support member 46a is also rigidly connected to the carrier 96, so that the support member 46a, its drive means 50, and the first drive arm 48a, are also carried thereby.

A hydraulic ram (not shown) can be actuated to move the carrier 96 relative to the base member 40, i.e. into and out of the paper as drawn in Fig.6, which will cause corresponding movement of the first awning 60.

The holding bar 56, to which the second edge of the awning 60 is attached, is also connected to the carrier 96, and is slidable along the channel 58; accordingly, movement of the carrier 96 effects corresponding movement of the first holding means, so that the entire awning 60 moves together into and out of the paper as viewed in Fig.6, and correspondingly to the left and right as viewed in Figs. 4 and 5.

The wall section 110 of the base member 40 is also connected to the carrier 96 so as to move with the carrier 96 relative to the remaining wall section 112. In this way, the extended drive arm 48a will not foul the wall section 110 when the carrier 96 is moved relative to the base member 40.

As described, movement of the carrier 96 into the paper as viewed in Fig.6 will cause movement of the awning 60 to the left as viewed in Figs. 4 and 5. The purpose of such movement is to permit the size of the erected canopy to be set to accommodate adjacent buildings and/or vehicles. Also, the awning can be repositioned, if the direction of the wind or the angle of the rain changes, for instance, without need for the vehicle 10 to be moved.

In alternative embodiments, both of the first 46a and second 46b support members are movable relative to the base member 40.

In yet another embodiment, the whole canopy is (alternatively or additionally) movable relative to the vehicle in the direction towards and away from the top of the page in Fig.5. Thus, the box 20 can be located on rails running across the vehicle 10, the box 20, and thus the erected canopy is movable relative to the vehicle. Accordingly, it is possible for the canopy to move relative to the vehicle (which is equivalent to a change in size of the covered area) by way of {i} one or both of the support members moving relative to the base member (such movement being in the direction substantially longitudinal to the vehicle 10), and {ii} both support members moving with the base member relative to the vehicle (such movement being in the direction substantially transverse to the vehicle).

When in the erected condition shown in Fig. 5, the cover 24 can be raised so that its side skirts 42 lie close to the underside of the respective awnings 60,62, and the cover is less likely to be a danger or hindrance to those working beneath it.

In the operating position shown in Fig.2 the canopy box 20 is substantially vertical and when extended the awnings 60,62 will be substantially horizontal. However, the canopy box can be moved to, and held in, positions other than vertical, if desired. Thus, with the canopy erected each ram piston 34 can be further extended until an erected canopy is at an angle below the horizontal, or can be retracted so that the erected canopy will be at an angle above the horizontal. This facility can be of advantage in wet weather (in determining a suitable rain water run-off direction from the awning, or as an intermittent adjustment to clear the awning of settled rain water). Also, the facility may be useful in windy weather (to limit the effect of the wind on the awning), and when the vehicle 10 is parked close to another vehicle or other obstruction such as a tree or building (to allow an opened awning to be positioned clear of that obstruction). As shown in Fig. 6, the drive arm 48a is pivotably connected to the support member 46a, and a hydraulic or pneumatic friction stay 100 is mounted therebetween. When the front of the awning 60 is angled downwardly, the rear will initially be angled upwardly; the drive arm (and the first idler arm which is carried thereby) can be angled relative to the support member by way of the pivot and friction stay so that it too can be angled downwardly, so that rain may run off the awning to both the front and rear.

Fig.7 shows a plan view of the bracket 70 for the idler arms, the arms not being shown in this figure. The bracket 70 is rigidly connected to a sleeve 72 which has an inner diameter to be a sliding fit around the support member 46a,b. The bracket 70 carries a pair of "C" shaped brackets 102 (see also Fig.6), which each have a six holes 104 therethrough, the respective holes in each bracket being parallel and adapted to receive bolts 106, by which an idler arm 66 may be hingedly connected thereto. Accordingly, each idler arm 66 can swing by a limited amount relative to its neighbours and to the bracket 70, and the bracket 70 can swing about the respective support member 46a,b, to a position determined by the awning.

As a precaution, the hydraulic actuation can be manually operated, for instance so that a canopy can be opened or retracted into the canopy box even though the electrics have failed. Thus, access to the control box 22 can be gained so that the hydraulic pump can be operated manually to supply fluid to, or withdraw fluid from, the respective actuators. In addition, if the hydraulic pump fails, the hydraulic fluid can be bled to the reservoir and the awning manually pushed back into its box.

In a first alternative embodiment, as above indicated the hydrualic actuators can be replaced by electric motors; such an embodiment would likely result in a reduction in weight of the canopy.

In a second alternative embodiment, the canopy can be manually actuated, i.e. without hydraulic or electrical actuation. Such an embodiment may be preferred for smaller canopies such as may be used for caravans and mobile homes. Such canopies will be erected manually by rotation or linear movement of the relevant parts of the canopy.

In the drawings shown with a canopy comprising two overlapping awnings, the awning 60 towards the front of the vehicle 10 is lower than the awning 62 towards the rear of the vehicle 10. In another embodiment the frontmost awning is above the rearmost awning. In both cases, however, it is important to collapse the lower awning first, since if an attempt is made to close the higher awning first, the slackened awning will foul the lower awning in the overlap region. Clearly, if the lower awning is collapsed before the higher awning, it will be necessary to erect the higher awning first. Also, the erected awnings 60,62 are angled slightly differently relative to the base member, i.e. they converge in the overlap region. Accordingly, whilst the spacing between the awnings in the overlap region 64 adjacent the base member 40 is equal to h, the spacing between the awnings adjacent the periphery of the canopy is less than h. This minimises the amount of rain or wind which can pass between the awnings.

The awnings 60,62 have side skirts (not shown) which hang down from the periphery of the canopy; such side skirts provide additional shelter against rain which might otherwise be blown underneath the canopy. Preferably, the side skirts are relatively short, perhaps 30cm or so, and so can be permanently connected to the respective awning and be stored therewith inside the box 20. In another embodiment, the side skirts can be connected to the canopy after it has been erected; such skirts can be longer, in some embodiments engaging the ground to enclose the covered area.

The awnings 60,62 also each have a skirt hanging down from the respective drive arm 48a,48b, which skirts in the erected condition of Fig.5 lie adjacent the front and rear of the vehicle 10 respectively. The purpose of these skirts (and of skirt 14) is to reduce or prevent rain being blown under the canopy from above the vehicle roof.

In addition, it is possible to fit lamp units to the canopy; usefully, the lamp units are carried by one or more of the idler arms, the wiring running along the or each idler arm (or within the idler arm if this is of hollow section). Preferably, the lamp units are of the low voltage, high wattage type, so that they can be powered by the vehicle's battery. The provision of lamp units will enable the area beneath the canopy to be illuminated during the hours of darkness.

## Claims

1. A temporary canopy which includes a base member (40), a first support member (46a) pivotally mounted relative to the base member, a first drive arm (48a) connected to the first support member to pivot therewith, a flexible awning (60) with first and second edges, first coupling means to connect the first edge of the awning to the first drive arm and first holding means (56,58) to connect the second edge of the awning to the base member, and first drive means (50) to pivot the first support member relative to the base member so as to move the first drive arm whereby to move the said first edge of the awning relative to the second edge in order to open a closed awning or to close an opened awning.

2. A temporary canopy according to claim 1 in which the base member is part of a hollow container (20) within which the closed canopy can be stored.

3. A temporary canopy according to claim 1 in which the first support member, first drive arm, first drive means and awning are all carried by a carrier means, the carrier means being mounted for translational movement relative to the base member, and in which the first holding means is guided for corresponding translational movement relative to the base member.

4. A temporary canopy according to claim 1 in which the base member carries a second support member (46b) with a second drive arm (48b), the second support member being located at a distance from the first support member.

5. A temporary canopy according to claim 1 in which the awning comprises several triangular sections with radial edges held by idler arms (66a-g,66h-n) pivotally mounted on the first support arm.

6. A temporary canopy according to claim 5 in which the idler arms are of differing lengths.

7. A temporary canopy according to claim 1 in which the base member is mounted on a vehicle (10).

8. A temporary canopy according to claim 7 in which the base member is mounted on a roof rack (12) which is carried on the vehicle.

9. A temporary canopy according to claim 7 in which, with the canopy erected, the base member can be tilted relative to the vehicle.

10. A temporary canopy according to claim 1 in which the ive means incorporates a hydraulic actuator, hydraulic fluid being pumped to the hydraulic actuator by an electric pump.
